# FASCICULE DE BREVET EUROPEEN

(11) **EP 2 475 512 B1**
(45) Date de publication et mention de la délivrance du brevet: **17.02.2016**
(21) Numéro de dépôt: 10748105.3
(22) Date de dépôt: 06.09.2010
(51) Int. Cl.: B29C 49/48, B29C 49/42, B29C 31/00, B29C 49/36

(54) **PROCEDE DE CHANGEMENT DES EMPREINTES DE MOULAGE D'UNE STATION DE SOUFFLAGE DE RECIPIENTS EN PLASTIQUE ET DISPOSITIF DE STOCKAGE DYNAMIQUE**
VERFAHREN ZUR ÄNDERUNG DER FORMVERTIEFUNGEN FÜR EINE BLASFORMANLAGE FÜR KUNSTSTOFFBEHÄLTER UND DYNAMISCHE LAGERUNGSVORRICHTUNG
METHOD FOR CHANGING MOLDING CAVITIES FOR A STATION FOR BLOW-MOLDING PLASTIC CONTAINERS, AND DYNAMIC STORAGE DEVICE

(30) Priorité: 07.09.2009 FR 0956078
(43) Date de publication de la demande: 18.07.2012
(73) Titulaire: Sidel Participations, 76930 Octeville sur Mer (FR)
(72) Inventeur: DUCLOS, Yves-Alban, F-76930 Octeville sur Mer (FR); VALER, Séverine, F-76930 Octeville sur Mer (FR)
(74) Mandataire: Siloret, Patrick
(86) Numéro de dépôt international: PCT/EP2010/063014
(87) Numéro de publication internationale: WO 2011/026963

(56) Documents cités:
- EP-A2- 2 080 606
- WO-A1-2007/012308

## Description

L'invention se rapporte à un procédé de changement des empreintes de moulage de récipients d'une station de soufflage ou d'étirage-soufflage.

L'invention se rapporte plus particulièrement à un procédé de changement des empreintes de moulage de récipients, notamment de bouteilles, en une matière thermoplastique, d'une station de soufflage ou d'étirage-soufflage, la station de soufflage comportant :
- une pluralité de premiers moules réalisés en au moins deux éléments de moulage dont chacun est muni d'une portion d'une première empreinte de récipient, chaque moule étant susceptible d'occuper une position de moulage dans laquelle les éléments de moulage constitutifs sont joints pour former la première empreinte ;
- une pluralité d'unités porte-moule qui sont portées par un carrousel, chaque unité porte-moule porte un premier moule de manière mobile entre une position fermée dans laquelle le premier moule associé occupe sa position de moulage, et une position ouverte dans laquelle les éléments de moulage dudit premier moule sont disjoints ;
- un premier moyen de rangement de tous les premiers moules dans leur position de moulage ;
- un deuxième moyen de rangement d'une pluralité de deuxièmes moules qui sont similaires aux premiers moules et qui présentent une deuxième empreinte, tous les deuxièmes moules étant rangés dans leur position de moulage ;
le procédé de changement de toutes les premières empreintes comportant pour chaque unité porte-moule au moins une première étape de préparation au cours de laquelle des éléments de moulage d'un deuxième moule sont disjoints puis stockés sur un premier support de stockage intermédiaire avant d'être montés sur une unité porte-moule arrêtée dans une position angulaire indexée de remplacement lors d'une deuxième étape de remplacement ultérieure.

De telles stations de soufflage sont utilisées pour la fabrication de récipients, et notamment de bouteille, en une matière thermoplastique par soufflage ou par étirage-soufflage.

Les vendeurs de boisson cherchent souvent à donner des formes originales à leurs bouteilles afin de rendre leurs produits attractifs et originaux.

Cette tendance a des répercussions sur le fonctionnement des chaînes de fabrication de bouteilles. Les fabricants de bouteilles sont en effet contraints de procéder fréquemment à des changements d'empreintes de la station de soufflage afin d'obtenir des bouteilles de la forme souhaitée.

Pour simplifier ces changements, la demanderesse a déjà proposé, notamment dans le document EP-A-0.821.641, d'alléger les parties à changer en dissociant :
- les moyens de régulation de la température du moule qui sont fixés à demeure sur l'unité porte-moule ; et
- le moule proprement dit qui porte l'empreinte de la bouteille.

Ainsi, lors d'un changement d'empreinte, seul le moule est changé. Le moule est beaucoup plus léger car il présente un volume réduit par rapport à une solution dans laquelle les moyens de régulation sont intégrés au moule.

Cette solution donne entière satisfaction et elle a déjà permis de diminuer sensiblement la durée d'une opération de changement d'empreinte. En outre l'opération de changement d'empreinte est à présent réalisable par un opérateur seul.

Dans la suite de la description et dans les revendications, les moules à changer seront appelés "premiers moules" et les moules de remplacement seront appelés "deuxièmes moules". Les premiers moules et les deuxièmes moules présentent des structures similaires de manière qu'une même unité porte-moule puisse porter indifféremment l'un ou l'autre de ces moules.

Lors d'une opération de changement d'empreintes de moulage, un opérateur arrête le carrousel de porte-moule de manière qu'au moins un porte-moule équipé d'un premier moule à changer soit stoppé dans une position indexée de remplacement. Cette position indexée de remplacement est agencée en coïncidence avec un espace de travail dans lequel l'opérateur dispose d'une surface libre suffisante pour procéder au changement de moule.

Le fait de pouvoir arrêter l'unité porte-moule suffisamment longtemps pour procéder au changement suppose bien entendu que la station de soufflage soit mise hors production jusqu'à ce que tous les moules aient été remplacés.

Lors d'une première étape de préparation, des éléments de moulage d'un deuxième moule de remplacement sont disjoints puis stockés séparément sur un premier support de stockage intermédiaire. Le support de stockage intermédiaire est traditionnellement formé par une table qui est agencée dans l'espace de travail.

Puis, une deuxième étape de remplacement est enclenchée. Cette deuxième étape comporte trois phases successives.

Lors d'une première phase d'ouverture, l'unité porte-moule qui est arrêtée dans la position angulaire indexée de remplacement est ouverte pour donner accès aux moyens de fixation des éléments de moulage du premier moule sur leur support.

Ensuite, lors d'une deuxième phase de démontage, chaque élément de moulage porté par ladite unité porte-moule est démonté puis stocké sur un deuxième support de stockage intermédiaire libre. Le support de stockage intermédiaire est traditionnellement formé par une place libre de ladite table agencée dans l'espace de travail.

Puis, lors d'une troisième phase de montage, les éléments de moulage dudit deuxième moule qui a été stocké lors de la première étape, sont successivement montés sur les supports associés de ladite unité porte-moule pour remplacer les éléments de moulage démontés au cours de la deuxième phase de démontage.

Enfin, à l'issue de la deuxième étape de remplacement, une troisième étape de rangement est enclenchée. Au cours de cette troisième étape, ledit premier moule démonté est assemblé puis rangé dans un premier moyen de rangement.

L'opération d'assemblage permet d'obtenir un rangement compact.

Cette opération permet en outre de s'assurer que les éléments de moulage sont toujours utilisés en association dans un même moule. Ceci permet de simplifier l'identification d'un élément de moulage défectueux.

Les trois étapes du procédé de changement d'empreinte qui viennent d'être décrites sont réitérées depuis la première étape jusqu'à la troisième étape successivement pour chaque unité porte-moule de la station de soufflage qui sont arrêtées successivement dans la position indexée de remplacement par des moyens de commande actionnés par l'opérateur.

Un tel procédé de changement d'empreintes de moulage oblige cependant à interrompre la totalité de la chaîne de production de bouteilles. Ainsi, même si le procédé décrit ci-dessus offre déjà satisfaction, un raccourcissement de la durée d'arrêt de la chaîne de fabrication serait très appréciable en terme de temps et de coût de production.

En outre, le coût en temps d'une telle opération de changement d'empreintes de moulage se traduit pour l'opérateur chargé du changement par un stress important.

Le document EP-A2-2.080.606 a déjà proposé d'accélérer l'opération de changement moules en utilisant une machine automatique, telle qu'un bras robotisé, pour réaliser le changement de moules. Une telle solution permet de diminuer la durée de l'étape de remplacement.

Cependant, cette solution est onéreuse et peu adaptable aux différentes configurations de machines.

Pour résoudre ces problèmes, la présente invention propose un procédé perfectionné de changement d'empreintes de moulage du type décrit précédemment et caractérisé en ce que la première étape de préparation est réalisée pour tous les deuxièmes moules pendant que la station de soufflage produit encore des récipients avec les premiers moules, lesdits deuxièmes moules étant stockés disjoints sur une pluralité de supports de stockage intermédiaire associés qui sont agencés à proximité de la position indexée de remplacement.

Selon d'autres caractéristiques du procédé selon l'invention :
- le procédé comporte une deuxième étape de remplacement qui est enclenchée à l'issue de la première étape lorsque la station de soufflage a été mise hors production et au cours de laquelle :
- lors d'une première phase d'indexation et d'ouverture, une unité porte-moule est arrêtée dans une position angulaire indexée de remplacement ;
- puis lors d'une deuxième phase de démontage, les éléments de moulage du premier moule portés par ladite unité porte-moule sont démontés puis stockés disjoints sur un deuxième support de stockage intermédiaire libre ;

- puis, lors d'une troisième phase de montage, les éléments de moulage d'un des deuxièmes moules qui a été stocké lors de la première étape de préparation est monté sur ladite unité porte-moule ;
- le procédé comporte une troisième étape de rangement au cours de laquelle les premiers moules démontés au cours de la deuxième étape sont joints puis rangés dans le premier moyen de stockage, la troisième étape de rangement étant enclenchée après le démontage de tous les premiers moules et après que la station de soufflage a été remise en production pour produire des récipients avec les deuxièmes moules.

L'invention concerne aussi un dispositif de mise en oeuvre du procédé, caractérisé en ce que la première étape de préparation est réalisée pour tous les deuxièmes moules destinés à être montés sur la station de soufflage au cours du procédé pendant que la station de soufflage produit encore des récipients avec les premiers moules, lesdits deuxièmes moules étant stockés disjoints sur une pluralité de supports de stockage intermédiaire associés qui sont agencés à proximité de la position indexée de remplacement.

Selon d'autres caractéristiques du dispositif selon l'invention :
- les supports de stockage intermédiaire sont montés mobiles le long d'un circuit fermé ;
- le dispositif de stockage dynamique comporte au moins un support de stockage intermédiaire de plus que le nombre d'unités porte-moule de la station de soufflage de manière à disposer en permanence d'un support de stockage libre pour déposer les éléments de moulage démontés d'un premier moule ;
- le déplacement des supports de stockage intermédiaire est synchronisé avec la rotation du carrousel de la station de soufflage de manière que le support de stockage intermédiaire libre et un support de stockage portant un deuxième moule soient acheminés jusqu'à un poste fixe de travail situé à proximité de l'unité porte-moule équipée d'un premier moule arrêtée dans sa position angulaire de changement ;
- les supports de stockage intermédiaire sont portés par un carrousel ;
- le carrousel est un carrousel horizontal ;
- les supports de stockage intermédiaire sont portés par au moins un convoyeur horizontal ;
- le carrousel est un carrousel vertical dans lequel les supports de stockage intermédiaire sont formés ou portés par des nacelles.

D'autres caractéristiques et avantages apparaîtront au cours de la lecture de la description qui va suivre pour la compréhension de laquelle on se reportera aux dessins annexés parmi lesquels :
- la figure 1 est une vue en plan qui représente schématiquement une installation de fabrication de récipients en plastique par soufflage ou par étirage-soufflage ;
- la figure 2 est une vue en perspective représentant un moule en position disjointe qui est susceptible d'être monté sur une unité porte-moule de la station de soufflage de la figure 1 ;
- la figure 3 est une vue en perspective qui représente le moule de la figure 2 dans une position de moulage ;
- la figure 4 est une vue de dessus représentant une unité porte-moule qui est équipée d'un premier moule et qui est dans une position ouverte ;
- la figure 5 est un diagramme qui représente les étapes du procédé de changement d'empreintes réalisé selon les enseignements de l'invention ;
- la figure 6 est une vue de dessus qui représente une table de stockage intermédiaire sur laquelle reposent des deuxièmes moules dans une position disjointe ;
- la figure 7 est une vue de dessus qui représente un dispositif de stockage dynamique réalisé selon un premier mode de réalisation de l'invention sur lequel reposent des deuxièmes moules dans une position disjointe ;
- la figure 8 est une vue en perspective qui représente un support de stockage intermédiaire du dispositif de la figure 7 ;
- la figure 9 est une vue de face du support de stockage intermédiaire de la figure 8 ;
- la figure 10 est une vue de détail qui représente un tapis roulant d'extrémité comportant des roulements obliques pour permettre un transfert transversal des supports de stockage intermédiaire ;
- la figure 11 est une vue en perspective qui représente un dispositif de stockage dynamique réalisé selon un deuxième mode de réalisation de l'invention ;

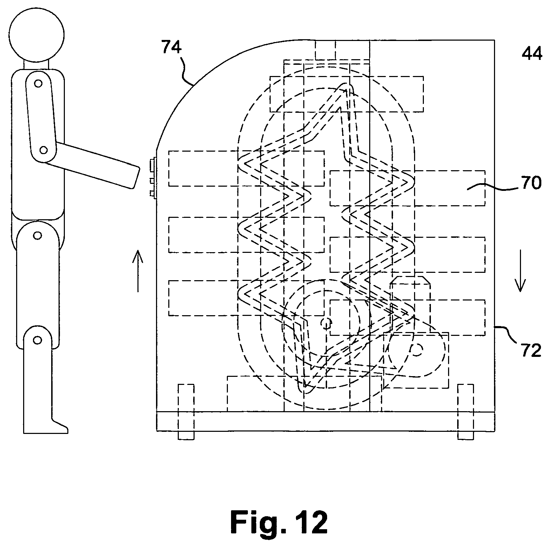

- la figure 12 est une vue de côté qui représente le dispositif de stockage dynamique de la figure 11 ;
- la figure 13 est une vue en perspective d'un plateau de rangement des moules ;
- la figure 14 est une vue similaire à celle de la figure 13 dans laquelle seule le plateau est représenté ;
- la figure 15 est une vue en coupe selon le plan de coupe 15-15 de la figure 13.

Dans la suite de la description, on adoptera à titre non limitatif des orientations longitudinale, transversale et verticale indiquées par le trièdre "L,V,T" des figures.

Dans la suite de la description, des éléments présentant des fonctions analogues, similaires ou identiques seront désignés par des mêmes numéros de référence.

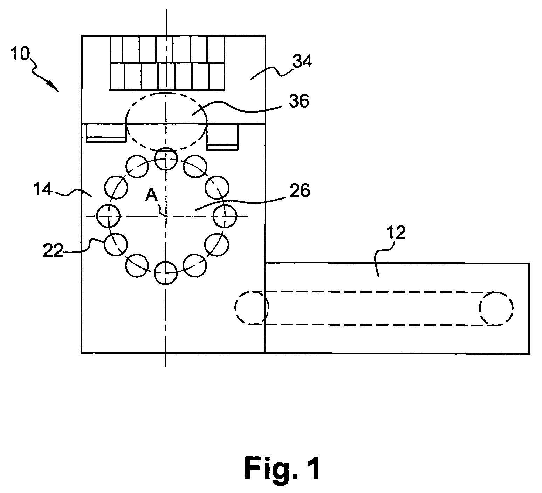

On a représenté à la figure 1 une installation 10 de fabrication de récipients, notamment de bouteilles, en matériau thermoplastique à partir de préformes ou d'ébauches (non représentées).

L'installation 10 comporte notamment un four 12 et une station 14 de soufflage ou de étirage-soufflage. Les préformes sont convoyées automatiquement dans le four 12 pour être préalablement chauffées à une température suffisante pour permettre leur déformation ultérieure par soufflage dans la station 14 de soufflage.

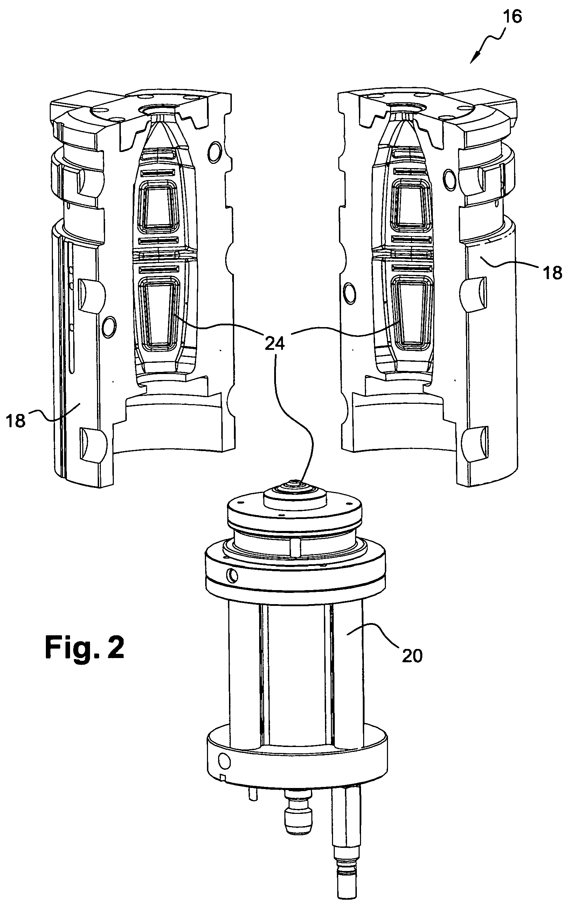

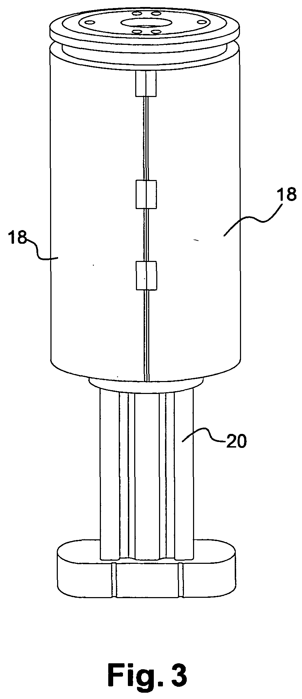

Le soufflage des récipients a lieu dans un moule 16, tel que celui représenté aux figures 2 et 3, qui est muni d'une empreinte 24 creuse dans laquelle on introduit une préforme, généralement en matière thermoplastique, préalablement chauffée. Cette préforme est ensuite mise sous pression pour lui conférer une forme souhaitée correspondant à celle de l'empreinte.

S'agissant des moyens de soufflage ou d'étirage-soufflage, on se reportera par exemple au document FR-A-2.764.544 pour de plus amples détails.

Comme représenté à la figure 2, les moules 16 sont généralement réalisés en trois parties : deux demi-moules 18, articulés dans un plan perpendiculaire à un axe principal vertical du moule 16, soit en translation, soit en rotation autour d'une charnière commune (le moule 16 étant alors dit du type "portefeuille"), et un fond de moule 20 déplaçable parallèlement à l'axe du moule 16.

Plus particulièrement, les demi-moules 18 et le fond de moule 20 forment un jeu d'éléments de moulage 18, 20 dont chacun est muni d'une portion de l'empreinte 24 de moulage du récipient.

Chaque demi-moule 18 présente plus particulièrement une face de joint 25 qui est destinée à être plaquée contre la face de joint 25 de l'autre demi-moule 18 en position assemblée des deux demi-moules 18. Une portion de l'empreinte 24 est réalisée en creux dans chaque face de joint 25.

Chaque moule 16 est ainsi susceptible d'occuper une position de moulage, telle que représentée à la figure 3, dans laquelle les éléments de moulage constitutifs du moule 16 sont joints pour former l'empreinte 24 de moulage du récipient, et une position disjointe, telle que représentée à la figure 2, dans laquelle les éléments de moulage 18, 20 sont séparés les uns des autres pour permettre l'éjection du récipient après soufflage.

Dans sa position de moulage, le moule 16 présente une forme sensiblement cylindrique.

La station 14 de soufflage représentée à la figure 1 est destinée à produire des récipients à la chaîne à un rythme élevé. La durée d'un cycle de soufflage pour chaque moule 16 est de l'ordre de quelques secondes. Pour augmenter encore la capacité de production des récipients, la station 14 de soufflage comporte une pluralité de moules 16 qui sont portés par un carrousel 26 par l'intermédiaire d'éléments de support appelés "unités porte-moule 22". Le carrousel 26 est monté rotatif autour d'un axe vertical "A".

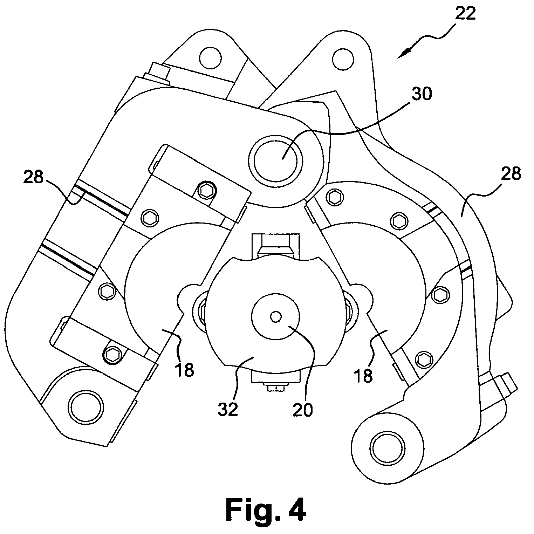

Comme illustré à la figure 4, chaque unité porte-moule 22 comporte au moins deux supports 28, 32 sur chacun desquels un élément de moulage 18, 20 associé est susceptible d'être monté.

Dans l'exemple ici décrit, l'unité porte-moule 22 est du type dit en portefeuille. Elle comporte plus précisément deux volets 28 liés en rotation par une charnière 30 d'axe vertical et un support 32 de fond moule mobile en coulissement vertical. Chaque demi-moule 18 est susceptible d'être fixé de façon amovible sur un volet 28 associé. Le fond de moule 20 est susceptible d'être fixé de façon amovible sur le support 32 de fond moule.

Les moyens de fixation amovible ne font pas l'objet de la présente invention. Ils ne seront donc pas décrits par la suite. Des exemples de tels moyens de fixation sont décrits en détail dans les documents WO-A-2008/000938 et EP-B-0.821.641.

Les supports 28, 32 sont mobiles entre une position fermée (non représentée) dans laquelle le moule 16 occupe sa position de moulage et dans laquelle une préforme est susceptible de subir l'opération de soufflage, et une position ouverte, comme représentée à la figure 4, dans laquelle les éléments de moulage dudit moule 16 sont disjoints les uns des autres pour permettre l'éjection du récipient formé après soufflage de la préforme.

Dans l'exemple représenté à la figure 1, le carrousel 26 comporte ici douze moules 16. Ce chiffre est donné à titre d'exemple non limitatif.

L'installation 10 est destinée à produire des récipients de différentes formes. A cet effet, les moules 16 sont amenés à être changés, parfois plusieurs fois par jour, par la mise en oeuvre d'un procédé de changement d'empreintes 24 de moulage au cours duquel les éléments de moulage 18A, 20A de tous les premiers moules 16A en service sont remplacés par des éléments de moulage 18B, 20B de deuxièmes moules 16B de remplacement présentant une deuxième empreinte 24B.

Tous les premiers moules 16A présentant une empreinte 24A identique sont généralement rangés dans un premier moyen de rangement associé tel qu'un chariot mobile (non représenté) munis d'étagères. Le nombre de premiers moules 16A identiques contenus dans un chariot est au moins égal au nombre d'unités porte-moule 22 portées par la station 14 de soufflage.

Il en est de même pour les deuxièmes moules 16B qui sont rangés dans un deuxième moyen de rangement (non représenté) identique ou similaire au premier moyen de rangement.

Les moules 16A, 16B sont généralement rangés dans leur position de moulage par souci de compacité. En effet, comme on peut le voir en comparant les figures 2 et 3, un moule 16A, 16B occupe beaucoup moins de place dans sa position de moulage.

En outre, ce mode de rangement en position de moulage permet de s'assurer que les mêmes éléments de moulage 18, 20 sont systématiquement utilisés en association pour former un même moule 16.

Les chariots mobiles peuvent ainsi être amenés dans un espace de travail 34 qui est réservé de manière contiguë à la station 14 de soufflage. La station 14 de soufflage comporte un accès 36, tel qu'une porte, donnant sur l'espace de travail 34 pour permettre à un opérateur d'accéder à une ou plusieurs unités porte-moule 22 lorsque le carrousel 26 est arrêté. Les unités porte-moules 22 accessibles sont dites arrêtées dans une position indexée de remplacement.

Selon une variante non représentée de l'invention, dans le cas d'une station d'étirage-soufflage, chaque moule est associé à une butée qui limite la profondeur d'étirage de la préforme par une tige d'étirage en fonction de la profondeur de l'empreinte du moule. La butée est montée de façon démontable sur la tige d'étirage. Cette butée est rangée avec un moule associé. Dans la suite de la description, cette butée sera considérée comme un élément de moulage pouvant être stocké de manière temporaire avec les demi-moules et le fond de moule lors d'un changement d'empreinte.

Pour pouvoir procéder au remplacement de tous les moules 16, la station 14 de soufflage comporte des moyens de commande (non représentés) de la rotation du carrousel 26 qui sont susceptibles d'être actionnés par l'opérateur pour que chaque unité porte-moule 22 puisse être sélectivement arrêtée dans sa position indexée de remplacement. La nécessité d'arrêter le carrousel 26 durant le procédé de changement d'empreintes impose de mettre temporairement la station 14 de soufflage hors production.

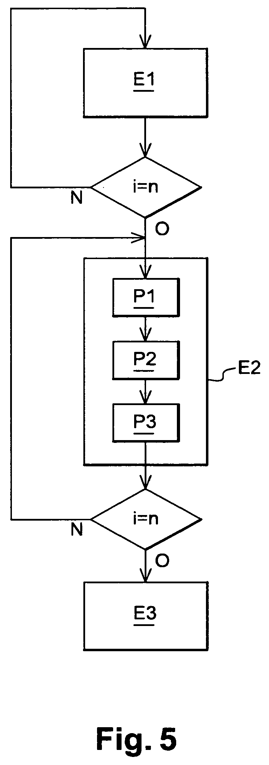

L'invention propose un procédé perfectionné permettant de changer les empreintes 24 de moulage en réduisant la durée de mise hors production de la station 14 de soufflage. Ce procédé est à présent décrit en détail en référence à la figure 5.

Au cours d'une première étape "E1" de préparation, le chariot contenant les deuxième moules 16B de remplacement est amené à proximité de l'espace de travail 34. Les éléments de moulage 18B, 20B des deuxièmes moules 16B de remplacement sont alors disjoints.

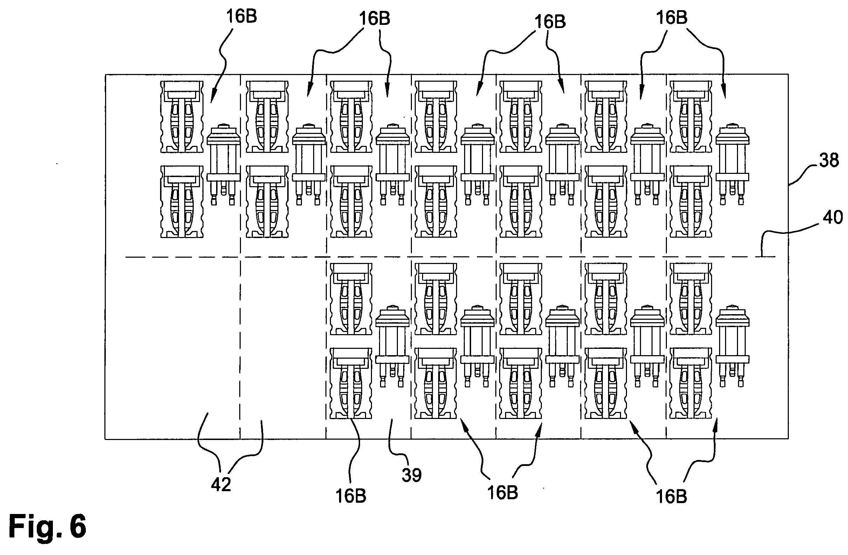

Chaque élément de moulage 18B, 20B d'un deuxième moule 16B est stocké temporairement sur un premier support de stockage 39 intermédiaire, comme cela est représenté à la figure 6.

Cette première étape "E1" est réitérée pour tous les deuxièmes moules 16B de remplacement avant d'engager la deuxième étape "E2". En d'autres termes, la première étape "E1" est réitérée "n" fois, "n" étant le nombre d'unités porte-moule portées par le carrousel 26. Ici, "n" est égal à douze.

Les éléments de moulage 18B, 20B de chacun des deuxièmes moules 16B sont stockés sur un support de stockage 39 intermédiaire associé. Ces supports de stockage 39 intermédiaire sont agencés dans l'espace de travail 34 à proximité de la position indexée de remplacement.

Selon un premier mode de réalisation de l'invention qui est représenté à la figure 6, les supports de stockage 39 intermédiaire sont formés par des emplacements présents d'une table 38 suffisamment grande pour recevoir simultanément les douze deuxièmes moules 16B à monter sur la station 14 de soufflage.

Avantageusement, la division de la table 38 en emplacements 39 est matérialisée par des traits ou des cloisons qui sont représentées par les traits interrompus 40 à la figure 6. Ceci permet à l'opérateur de repérer facilement les éléments de moulage 18B, 20B d'un même deuxième moule 16B.

En outre, chaque portion de table 39 comporte avantageusement des cales (non représentées) permettant de maintenir les éléments de moulage 18, 20 immobiles malgré leur forme semi-cylindrique.

Cette première étape de préparation "E1" est réalisée pour tous les deuxièmes moules 16B de remplacement pendant que la station 14 de soufflage est encore en production, c'est-à-dire pendant que des récipients conformés selon la première empreinte 24 sont encore produits.

Il est avantageux de prévoir la durée de cette opération afin de finir la première étape de préparation "E1" avant la mise hors production de la station 14 de soufflage. Ainsi cette première étape de préparation "E1" est réalisée en temps masqué, et elle permet de produire des récipients par soufflage pendant une partie du procédé de changement d'empreintes.

Après la fin de cette première étape de préparation "E1", la station 14 de soufflage est mise hors production.

Lorsque la station 14 de soufflage a été mise hors production, une deuxième étape "E2" de remplacement est enclenchée. Cette deuxième étape de remplacement "E2" comporte trois phases successives.

Lors d'une première phase "P1" d'indexation et d'ouverture, au moins une unité porte-moule 22 est commandée dans sa position indexée de remplacement. Ladite unité porte-moule 22 est ensuite commandée dans sa position ouverte afin de permettre à l'opérateur d'accéder aux éléments de moulage 18A, 20A du premier moule 16A porté par cette unité porte-moule 22.

Puis, lors d'une deuxième phase "P2" de démontage, les éléments de moulage 18A, 20A fixés de manière amovible sur ladite unité porte-moule 22 sont l'un après l'autre démontés puis stockés temporairement sur un deuxième support de stockage 42 intermédiaire libre.

Pour gagner du temps, les éléments de moulage 18A, 20A démontés sont stockés séparément en position disjointe.

Selon le premier mode de réalisation de l'invention qui est représenté à la figure 6, le support de stockage 42 intermédiaire est formé par une table 38. Il s'agit par exemple d'un emplacement libre 42 de la même table 38 que celle utilisée pour stocker les deuxièmes moules 16B dans leur position disjointe.

Cette deuxième phase de démontage "P2" est répétée pour les trois éléments de moulage 18A, 20A dudit premier moule 16A.

Ensuite, lors d'une troisième phase "P3" de montage, chaque élément de moulage 18B, 20B d'un deuxième moule 16B est monté sur les supports associés à présent libres de ladite unité porte-moule 22. Pour ce faire les éléments de moulage 18B, 20B dudit deuxième moule 16B sont chacun à leur tour successivement transportés depuis le support de stockage 39 intermédiaire associé jusqu'à l'unité porte-moule 22 en position indexée de remplacement, puis ils sont fixés à ladite unité porte-moule 22.

Les trois phases "P1" à "P3" de la deuxième étape "E2" sont réitérées pour chaque unité porte-moule 22, jusqu'à ce que toutes les unités porte-moules 22 soient équipées d'un deuxième moule 16B. Pendant toute la durée de cette deuxième étape "E2", la station 14 de soufflage demeure hors production.

Lors de cette réitération, le support de stockage 42 intermédiaire libre pour recevoir les éléments de moulage 18A, 20A en train d'être démontés est formé par l'emplacement de table 39 qui a été libérée par le deuxième moule 16B monté lors de l'itération précédente. Ceci permet avantageusement de gagner de la place.

Ainsi, la table 38 comporte suffisamment d'emplacements 39, 42 pour stocker temporairement au moins un moule 16 de plus que la station 14 de soufflage ne comporte d'unités porte-moule 22. La table 38 représentée à la figure 6 comporte quatorze emplacements 39, 42. De cette manière, la table comporte en permanence deux emplacements libres 42 pour recevoir les éléments de moulage 18A, 20A d'un premier moule 16A.

Généralement, pour ne pas se tromper de moule 16, l'opérateur monte le deuxième moule 16B qui est posé dans l'emplacement 39 adjacent au dernier emplacement libre 42. L'opérateur fait ainsi des allers-retours entre l'emplacement libre 42 de la table 38 et l'unité porte-moule 22 arrêtée en position indexée de remplacement.

A chaque changement d'unité porte-moule, l'emplacement libre 42 se "déplace" dans un sens horaire ou anti-horaire au cours des itérations successives de la deuxième étape "E2".

Lorsque cette deuxième étape de remplacement "E2" a été itérée pour chacune des unités porte-moule 22, la table de stockage 38 intermédiaire ne comporte plus que des premiers moules 16A dans leur position disjointe, tandis que toutes les unités porte-moule 22 de la station 14 de soufflage sont équipées de deuxièmes moules 16B.

La station 14 de soufflage peut alors être remise en production pour produire des récipients conformes à la deuxième empreinte 24B.

Une troisième étape "E3" de rangement des premiers jeux est déclenchée après que la station 14 de soufflage a été remise en production pour produire des récipients avec les deuxièmes moules 16B. Lors de cette troisième étape "E3", les premiers moules 16A qui sont stockés sur les supports de stockage 42 intermédiaire sont chacun à leur tour assemblés puis rangés dans un chariot de rangement associé.

En d'autres termes, le procédé de changement d'empreintes selon l'invention propose de réaliser chaque étape "E1" à "E3" pour tous les moules 16A, 16B avant de passer à l'étape suivante alors que dans le procédé selon l'état de la technique, les étapes étaient réalisées successivement pour un moule 16A, 16B à la fois.

Ce procédé de changement d'empreintes 24 de moulage permet avantageusement de réaliser la première étape de préparation "E1" et la troisième étape de rangement "E3" en temps masqué, c'est-à-dire lorsque la station 14 de soufflage est en production. Ceci permet de réduire significativement la durée de mise hors production de la station 14 de soufflage.

Un tel procédé, mis en oeuvre à l'aide d'une table de stockage 38 intermédiaire telle que représentée à la figure 6, permet déjà de réduire la durée de mise hors production de la station 14 de soufflage. Cependant, il est encore possible de réduire la durée de mise hors production en limitant les déplacements de l'opérateur par rapport à ce premier mode de réalisation dans lequel l'opérateur doit faire le tour de la table 38 pour suivre le déplacement de l'emplacement libre 42.

Ainsi, selon un deuxième mode de réalisation de l'invention, le procédé de changement d'empreintes 24 est mis en oeuvre en remplaçant la table 38 de stockage intermédiaire par un dispositif de stockage dynamique 44 qui comporte une pluralité de supports de stockage intermédiaire 54 dont chacun est destiné à recevoir les éléments de moulage disjoints 18, 20 d'un moule 16.

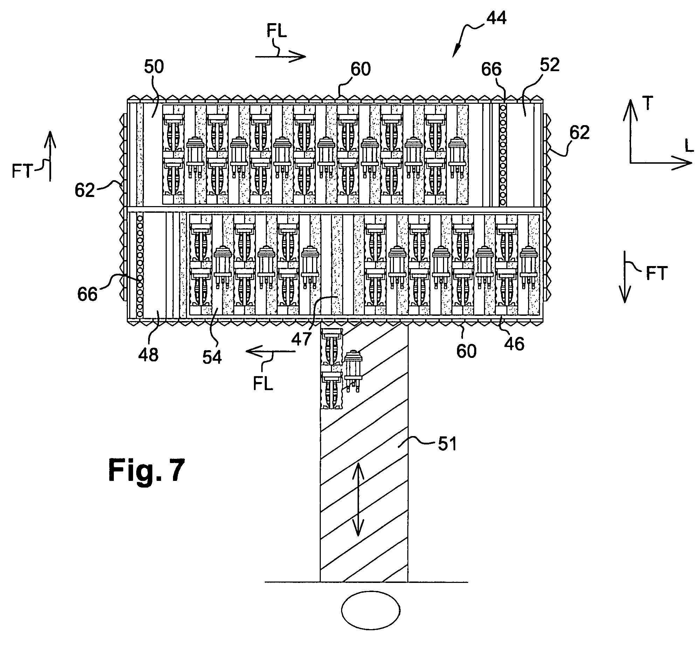

Comme représenté à la figure 7, les supports de stockage 54 intermédiaire sont mobiles de manière à délivrer de manière automatique ou commandée les deuxièmes moules 16B à monter et un support de stockage 47 intermédiaire libre au niveau d'un poste fixe de travail qui est agencé dans l'espace de travail, directement en vis-à-vis de l'unité porte-moule en position indexée de remplacement. Ainsi, les déplacements de l'opérateur se limitent à des allers-retours au plus court le long d'une allée 51 entre le poste fixe de travail et l'unité porte-moule en position indexée de remplacement. Ainsi, au lieu de suivre le support de stockage libre, c'est le support de stockage libre qui est déplacé jusqu'au poste fixe de travail de l'opérateur.

Afin de réduire l'encombrement du dispositif de stockage dynamique 44, les supports de stockage 54 intermédiaire sont montés mobiles le long d'un circuit fermé.

Comme expliqué précédemment pour la table 38, un tel dispositif de stockage dynamique 44 comporte au moins un support de stockage 54 intermédiaire de plus que le nombre d'unités porte-moule 22 de la station 14 de soufflage. Ainsi, il existe toujours un support de stockage intermédiaire libre, qui sera référencé 47 par la suite, pour permettre de déposer les éléments de moulage 18A, 20A d'un premier moule 16A après leur démontage.

Avantageusement, le déplacement des supports de stockage 54 intermédiaire est synchronisé avec la rotation du carrousel 26 de la station 14 de soufflage de manière que le support de stockage 47 intermédiaire libre et l'un des supports de stockage 54 portant un deuxième moule 16B soient acheminés jusqu'au poste fixe de travail situé à proximité de l'unité porte-moule 22 équipée d'un premier moule 16A arrêtée dans sa position angulaire de changement.

Le dispositif de stockage dynamique 44 représenté aux figures 7 à 10 est formé par un carrousel horizontal qui présente un encombrement similaire à celui de la table 38 du premier mode de réalisation de l'invention.

Le dispositif de stockage dynamique 44 comporte principalement deux rangées de deux convoyeurs à bande ou tapis roulants 46, 48, 50, 52 horizontaux qui portent des plateaux 54 formant support de stockage intermédiaire. Les bandes des deux tapis roulant 46, 48 et 50, 52 d'une même rangée tournent longitudinalement dans un même sens.

Les deux rangées de convoyeurs 46, 48 et 50, 52 sont identiques par symétrie centrale. Ainsi, comme indiqué par les flèches "FL" de la figure 7, les tapis roulant 46, 48 de la première rangée tournent de manière à entraîner les plateaux 54 longitudinalement vers l'arrière, tandis que les tapis roulant 50, 52 de la deuxième rangée tournent de manière à entraîner les plateaux 54 longitudinalement vers l'avant.

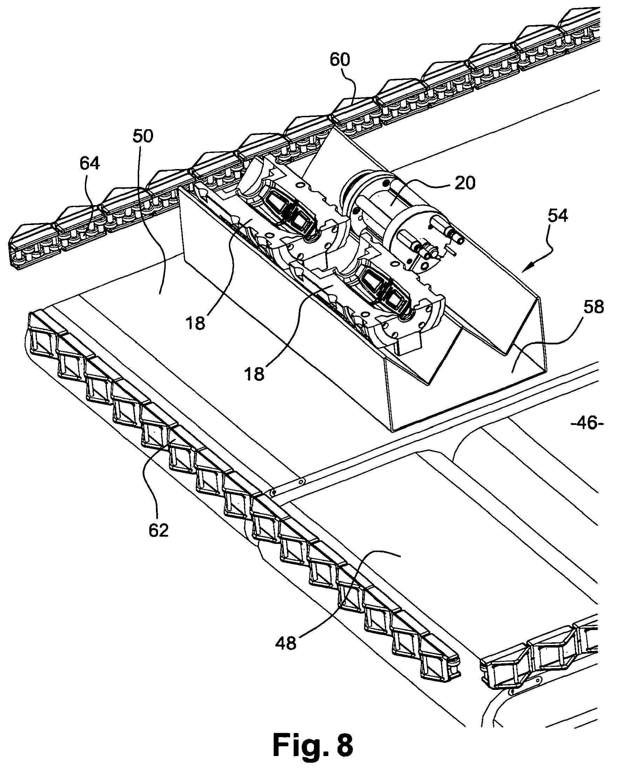

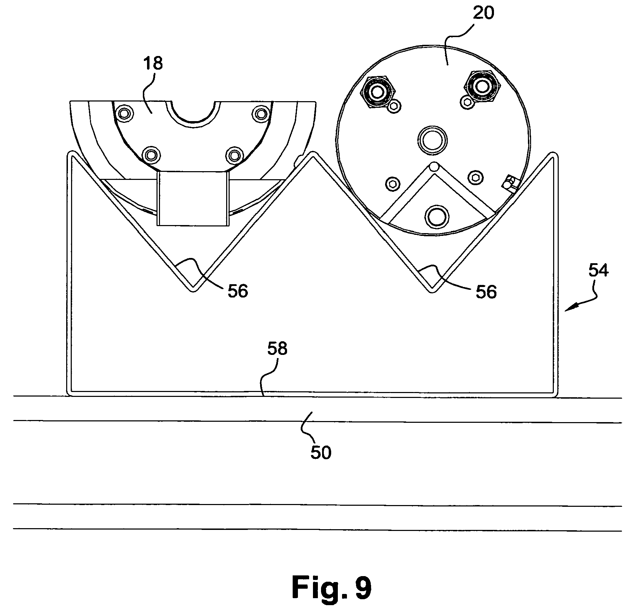

Chaque support de stockage intermédiaire est formé par un plateau 54 individuel et indépendant qui est susceptible de porter les éléments de moulage 18, 20 d'un unique moule 16. Un plateau 54 est représenté plus en détail aux figures 8 et 9.

Les éléments de moulage 18, 20 présentent des surfaces cylindriques. Pour éviter que les éléments de moulage 18, 20 ne roulent sur les plateaux 54, chaque plateau 54 présente deux gouttières 56 en forme de "V" qui sont agencées parallèlement. Les gouttières sont ici orientées transversalement. Ainsi, comme représenté à la figure 9, chaque élément de moulage 18, 20 est calé de manière stable entre les parois de la gouttière 56.

Chaque plateau 54 comporte en outre un fond plat 58 qui repose au contact de la bande du tapis roulant 46, 48, 50, 52 qui le porte.

Les plateaux 54 sont répartis en nombres égaux sur les deux rangées longitudinales parallèles et voisines de tapis roulants 46, 48, 50, 52.

Chaque rangée comporte deux tapis roulants 46, 48 et 50, 52. Comme représenté à la figure 7, une première rangée 46, 48 alimente le poste fixe de travail, tandis que la deuxième rangée 50, 52 est séparée transversalement du poste fixe de travail par la première rangée 46, 48.

Pour chaque rangée, un premier tapis roulant 46, 50 est chargé de convoyer les plateaux 54 longitudinalement d'une extrémité à l'autre de la rangée en direction du deuxième tapis roulant 48, 52. Dans la configuration représentée à la figure 7, le premier tapis roulant 46 de la première rangée fait circuler les plateaux 54 longitudinalement vers l'arrière, tandis que le premier tapis roulant 50 de la deuxième rangée fait circuler les plateaux 54 longitudinalement vers l'avant.

Les premiers tapis roulant 46, 50 présentent une longueur suffisante pour porter au moins la moitié des plateaux 54, ici sept plateaux.

Pour éviter que les plateaux ne tombent, le dispositif est encadré par des rails de guidage longitudinaux 60 et transversaux 62. Les rails 60, 62 sont équipés d'une pluralité de galets de roulement 64 d'axe verticaux qui sont répartis tout au long des rails 60, 62 pour faciliter le défilement des plateaux.

Les rails 62 situés au deux extrémités longitudinales du dispositif s'étendent transversalement de manière à former un butée pour éviter que les plateaux 54 ne tombent lorsqu'ils arrivent en bout de tapis roulant.

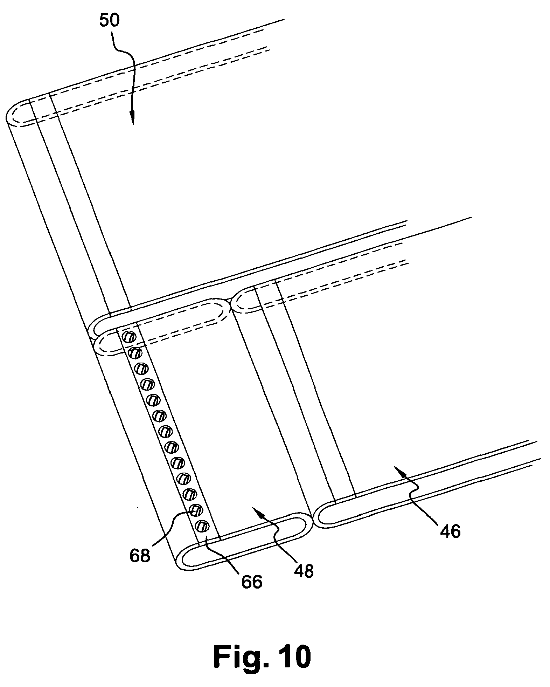

Comme cela est illustré en détail à la figure 10, un deuxième tapis roulant 48, 52 de transfert est agencé dans le prolongement longitudinal du premier tapis roulant 46, 50 selon le sens de déplacement des plateaux 54 sur chaque rangée. Le deuxième tapis roulant de transfert 48, 52 est muni d'au moins une latte transversale 66 qui porte des roulement à rouleaux 68 qui sont orientés de manière oblique.

Le tapis roulant de transfert 48, 52 tourne dans le même sens que le tapis roulant au bout duquel il est agencé. Cependant, le deuxième tapis roulant de transfert 48, 52 présente une longueur très inférieure à celle du premier tapis roulant 46, 50. Le deuxième tapis roulant de transfert présente une longueur sensiblement égale à celle d'un plateau 54 de manière que chaque deuxième tapis roulant de transfert 48, 52 ne puisse porter qu'un unique plateau 54 à la fois.

Dans un état immobile entre deux rotation, les deuxièmes tapis roulants de transferts 48, 52 ne portent pas de plateau 54. Tous les plateaux sont donc portés par les premiers tapis roulant 46, 50 de manière qu'il ne reste aucune place disponible sur les premiers tapis roulants 46, 50.

Lors d'une rotation du carrousel 44, les deux rangées de tapis roulants 46, 48 et 50, 52 fonctionnent de manière synchrone.

La rotation des premiers tapis roulants 46, 50 provoque la transmission longitudinale du plateau se situant en fin de bande, selon le sens de rotation de la bande, sur le deuxième tapis roulant de transfert 48, 52 situé dans son prolongement. Ceci provoque simultanément la libération d'une place sur chaque rangée en début de premier tapis roulant 46, 50 pour permettre de recevoir un plateau 54 de l'autre rangée.

Lorsqu'un plateau 54 est transmis au deuxième tapis roulant de transfert 48, 52 par le premier tapis roulant de transfert 46, 50, le plateau 54 est tout d'abord plaqué longitudinalement contre le rail de butée 62. Le plateau 54 est ainsi immobilisé longitudinalement dans le sens de rotation de la bande du deuxième tapis roulant 48, 52.

Lorsqu'un plateau 54 est chargé sur le deuxième tapis de transfert 48, 52, le premier tapis roulant 46, 50 est arrêté de manière en empêcher l'entassement des plateaux 54 les uns contre les autres.

Puis, le deuxième tapis roulant 48, 52 continuant seul sa rotation, les rouleaux obliques 68 passent sous le fond 58 du plateau 54. Les rouleaux obliques 68 sont alors entraînés en rotation par adhérence avec le fond 58. La rotation des rouleaux obliques 68 entraîne le transfert transversal du plateau 54 vers l'autre rangée en roulant contre le rail de butée 62 comme indiqué par les flèches "FT" de la figure 7.

Ainsi, grâce à ce dispositif ingénieux, les plateaux 54 sont entraînés en déplacement le long d'un circuit fermé dans un sens horaire comme indiqué par les flèches "FT, FL" de la figure 7.

Le dispositif de stockage dynamique 44 est en outre équipé de moyens de commande (non représentés) qui permettent de synchroniser la rotation des tapis roulants 46, 48, 50, 52. Ces moyens de commande sont par exemple actionnés par l'opérateur chargé du remplacement des empreintes. Les moyens de commande permettent ainsi de faire avancer les plateaux 54 pas à pas, un pas étant égal à la largeur d'un plateau 54.

Avantageusement, les moyens de commande du dispositif de stockage dynamique 44 sont équipés d'un commutateur (non représenté) équipé de deux états qui permet à l'opérateur de sélectionner :
- un premier état dans lequel la rotation du carrousel 26 est synchronisée avec la rotation des tapis roulant 46, 48, 50, 52 pendant la deuxième étape "E2" du procédé de changement des empreintes 24 ;
- un deuxième état dans lequel la rotation du carrousel 26 est rendue indépendante de celle des tapis roulant 46, 48, 50, 52 pendant la première étape "E1" et/ou la troisième étape "E3" du procédé de changement des empreintes 24.

Le dispositif de stockage dynamique 44 est avantageusement équipé de roulettes de manière à pouvoir le déplacer facilement, par exemple d'une installation de soufflage 10 vers une autre.

Selon une variante non représentée de l'invention, les tapis roulants 46, 48, 50, 52 sont remplacés par un convoyeur du type utilisé dans les aéroports pour permettre aux passagers de récupérer leurs bagages à leur arrivée.

Selon un troisième mode de réalisation qui est représenté aux figures 10 11, le dispositif de stockage dynamique 44 est formé par un carrousel vertical.

Le principe est le même que pour le deuxième mode de réalisation de l'invention. Seules les différences entre ces deux modes de réalisation seront donc détaillées.

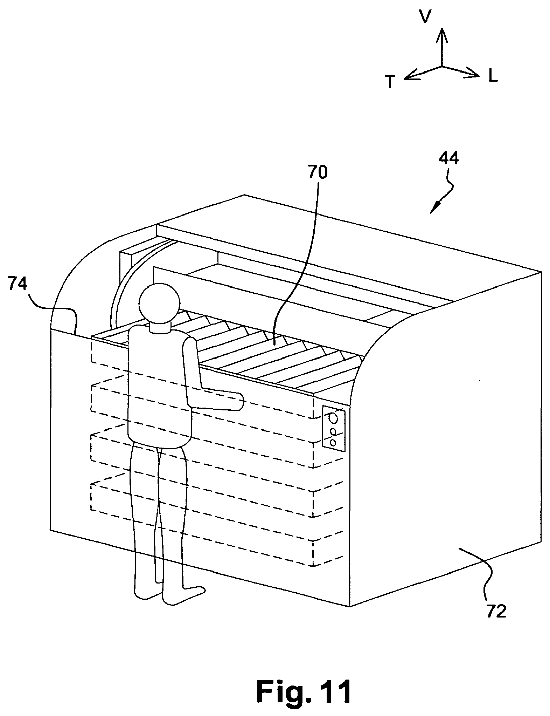

Comme cela apparaît plus clairement à la figure 11, ce carrousel vertical 44 comporte une pluralité de nacelles 70 qui forment ou portent les supports de stockage 54 intermédiaire.

Les nacelles 70 se déplacent le long de deux colonnes qui s'étendent du sol jusqu'à une hauteur déterminée par le nombre de nacelles 70. La première colonne est agencée à proximité de la station 14 de soufflage.

Ainsi les nacelles 70 se déplacent autour d'une boucle verticale. Pour éviter qu'elles ne renversent leur contenu, les nacelles 70 sont suspendues.

Chaque nacelle 70 est ici susceptible de porter les éléments de moulage 18, 20 de deux moules 16. En d'autres termes, une nacelle 70 forme ou porte deux supports de stockage 54 intermédiaire parallèles qui sont rangés longitudinalement.

Les supports de stockage 54 intermédiaire présentent la même forme que dans le premier mode de réalisation. Ils ne seront donc pas décrits plus en détail.

Le dispositif comporte un carter 72 muni d'une baie 74 d'accès à une nacelle 70 qui est agencée à hauteur de manipulation pour un opérateur, par exemple à la même hauteur que la table 38.

Un tel agencement présente l'avantage d'être très compact en encombrement du sol par rapport au dispositif de stockage dynamique du deuxième mode de réalisation. En effet, le stockage en hauteur des moules 16 permet de gagner beaucoup de place horizontalement.

Ainsi, le procédé de changement d'empreintes associé à un dispositif de stockage dynamique permet de réduire énormément la durée de mise hors production de l'installation de fabrication 10.

On comprendra que l'invention n'est pas limitée aux exemples qui ont été donnés précédemment pour illustrer l'invention. L'invention est applicable à tous dispositifs de soufflage de récipient qui comporte des moules amovibles.

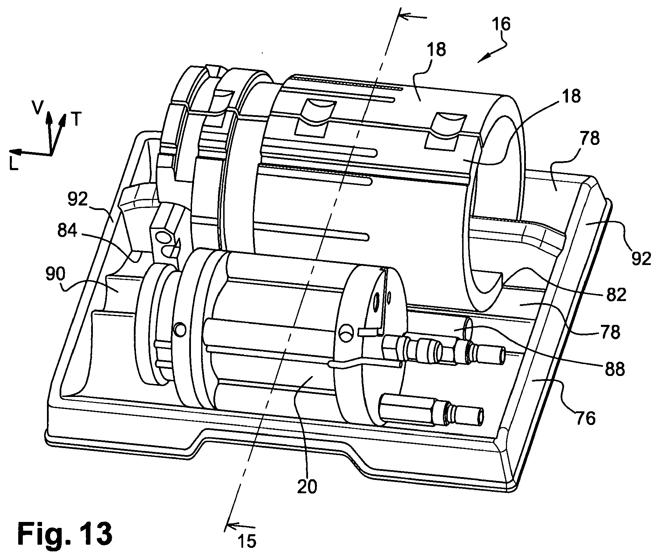

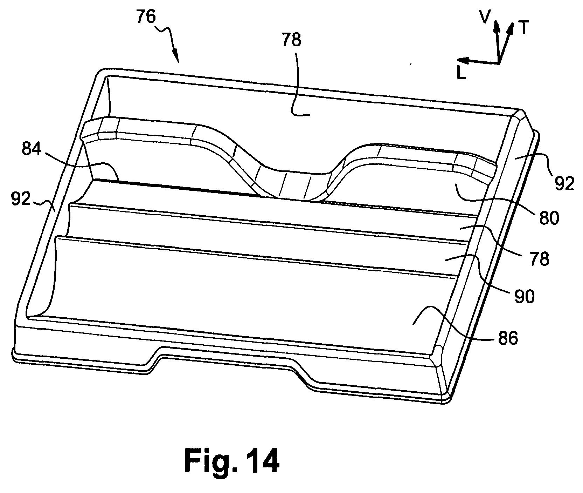

Selon une variante de l'invention qui est représentée aux figures 13 à 15, au lieu d'être rangés assemblés dans les moyens de rangement, les différents éléments de moulage 18, 20 des moules 16 sont posés sans être assemblés sur des plateaux 76 horizontaux prévus à cet effet.

Chaque plateau 76 est destiné à recevoir les éléments de moulage 18, 20 d'un moule 16 associé. Le plateau 76 présente avantageusement des compartiments permettant de maintenir stablement chaque élément de moulage 18, 20 en position rangée non assemblée.

Les compartiments sont ici agencés parallèlement. Ainsi les divers éléments de moulage 18, 20 sont agencés transversalement les uns à côté des autres de manière que leurs axes principaux longitudinaux soient parallèles entre eux.

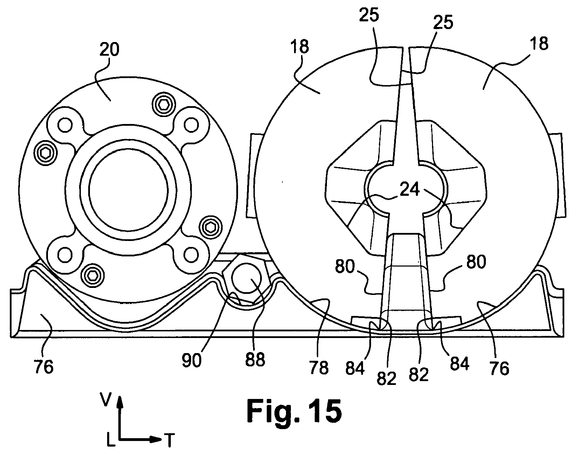

Les demi-moules 18 sont destinés à être posés allongés avec leur face de joint 25 globalement verticale, comme cela est particulièrement visible à la figure 15. Cette position des demi-moules 18 permet de limiter l'encombrement horizontal du plateau 76.

La face de joint 25 comportant la demi-empreinte 24 correspondante est inclinée légèrement vers le bas afin d'éviter que des poussières ne viennent s'y déposer. Pour ce faire, le compartiment de chaque demi-moule 18 présente une première zone concave 78 qui est destinée à épouser la face cylindrique extérieure dudit demi-moule 18.

En outre, une face de calage 80 légèrement inclinée par rapport à la verticale est destinée à recevoir en appui la face de joint 25 dudit demi-moule 18. Une arête 82 délimitée entre la face cylindrique extérieure et la face de joint 25 du demi-moule 25 est destinée à être calée dans l'angle 84 formé entre la face de calage 80 et la zone concave 78. Ainsi, le demi-moule 18 est reçu de manière stable dans son compartiment.

Les deux demi-moules 18 sont ici agencés de manière que leurs faces de joint 25 soient en vis-à-vis, légèrement à distance transversalement l'une de l'autre. Ceci permet de limiter encore le dépôt de poussières sur les faces de joint 25. A cet effet, les deux zones concaves 78 de chaque compartiment sont séparées uniquement par une paroi. Ladite paroi est délimitée transversalement par les faces de calage 80 de chacun des compartiments.

Le fond du moule 20 présente aussi une forme cylindrique d'axe longitudinal. Le fond de moule 20 est destiné à être rangé couché. Pour éviter qu'il ne roule sur le plateau 76, il est posé dans une gouttière 86 longitudinale qui cale transversalement le fond de moule 20 en position allonger en l'empêchant de rouler.

S'agissant dans l'exemple représenté aux figures 13 à 15 d'un moule 16 destiné à une machine d'étirage-soufflage, le moule 16 comporte ici une butée 88 de tige d'étirage. Cette butée 88 se présente sous la forme d'une tige fine. Elle est rangée entre le fond de moule 20 et les demi-moules 18. La butée 88 est posée dans une gouttière 90 longitudinale adaptée de manière à empêcher qu'elle ne roule transversalement.

En outre, le plateau 76 est fermé longitudinalement des deux côtés par des parois 92 transversales verticales d'extrémités longitudinales afin d'empêcher les éléments de moulage 18, 20, 88 de glisser longitudinalement hors du plateau au cas où le plateau 76 serait penché.

Un tel plateau 76 est très pratique car il évite d'avoir à assembler les éléments de moulage 18, 20, 88 pour les ranger.

De plus un tel plateau 76 est transportable par un opérateur seul. Ainsi, lorsqu'on veut remplacer un moule 16, un opérateur peut directement poser le plateau 76 chargé des éléments de moulage 18, 20, 88 sur le dispositif de stockage dynamique. Ceci permet ainsi de se dispenser des opérations d'assemblage et de démontage des moules 16.

## Revendications

1. Procédé de changement des empreintes (24) de moulage de récipients, notamment de bouteilles, en une matière thermoplastique, d'une station (14) de soufflage ou d'étirage-soufflage, la station (14) de soufflage comportant :
- une pluralité de premiers moules (16A) réalisés en au moins deux éléments de moulage (18A, 20A) dont chacun est muni d'une portion d'une première empreinte (24A) de récipient, chaque moule (16A) étant susceptible d'occuper une position de moulage dans laquelle les éléments de moulage (18A, 20A) constitutifs sont joints pour former la première empreinte (24A) ;
- une pluralité d'unités porte-moule (22) qui sont portées par un carrousel (26), chaque unité porte-moule (22) porte un premier moule (16A) de manière mobile entre une position fermée dans laquelle le premier moule (16A) associé occupe sa position de moulage, et une position ouverte dans laquelle les éléments de moulage (18A, 20A) dudit premier moule (16A) sont disjoints ;
- un premier moyen de rangement de tous les premiers moules (16A) dans leur position de moulage ;
- un deuxième moyen de rangement d'une pluralité de deuxièmes moules (16B) qui sont similaires aux premiers moules (16A) et qui présentent une deuxième empreinte (24B), tous les deuxièmes moules (16B) étant rangés dans leur position de moulage ;
le procédé de changement de toutes les premières empreintes (24A) comportant pour chaque unité porte-moule (22) au moins une première étape de préparation (E1) au cours de laquelle des éléments de moulage (18B, 20B) d'un deuxième moule (16B) sont disjoints puis stockés sur un premier support de stockage (39, 54) intermédiaire avant d'être montés sur une unité porte-moule (22) arrêtée dans une position angulaire indexée de remplacement lors d'une deuxième étape de remplacement (E2) ultérieure,
**caractérisé en ce que** la première étape de préparation (E1) est réalisée pour tous les deuxièmes moules (16B) destinés à être montés sur la station (14) de soufflage pendant que la station (14) de soufflage produit encore des récipients avec les premiers moules (16A), lesdits deuxièmes moules (16B) étant stockés disjoints sur une pluralité de supports de stockage (39, 54) intermédiaire associés qui sont agencés à proximité de la position indexée de remplacement.

2. Procédé selon la revendication précédente, **caractérisé en ce qu'**il comporte une deuxième étape de remplacement (E2) qui est enclenchée à l'issue de la première étape (E1) lorsque la station (14) de soufflage a été mise hors production et au cours de laquelle :
- lors d'une première phase (P1) d'indexation et d'ouverture, une unité porte-moule (22) est arrêtée dans une position angulaire indexée de remplacement ;
- puis lors d'une deuxième phase de démontage (P2), les éléments de moulage (18A, 20A) du premier moule (16A) portés par ladite unité porte-moule (22) sont démontés puis stockés disjoints sur un deuxième support de stockage (42, 47) intermédiaire libre;
- puis, lors d'une troisième phase de montage (P3), les éléments de moulage (18B, 20B) d'un des deuxièmes moules (16B) qui a été stocké lors de la première étape de préparation (E1) est monté sur ladite unité porte-moule (22).

3. Procédé selon la revendication précédente, **caractérisé en ce qu'**il comporte une troisième étape de rangement (E3) au cours de laquelle les premiers moules (16A) démontés au cours de la deuxième étape (E2) sont joints puis rangés dans le premier moyen de stockage, la troisième étape de rangement (E3) étant enclenchée après le démontage de tous les premiers moules (16A) et après que la station (14) de soufflage a été remise en production pour produire des récipients avec les deuxièmes moules (16B).

4. Dispositif de stockage dynamique (44) pour la mise en oeuvre du procédé selon l'une quelconque des revendications précédentes, comportent une pluralité de supports de stockage (54) intermédiaire dont chacun est destiné à recevoir les éléments de moulage (18, 20) disjoints d'un moule (16), et en ce que les supports de stockage (54) intermédiaire sont mobiles **caractérisé en ce que** le déplacement des supports de stockage (54) intermédiaire est synchronisé avec la rotation du carrousel (26) de la station (14) de soufflage de manière que le support de stockage (47) intermédiaire libre et un support de stockage (54) portant un deuxième moule (16B) soient acheminés jusqu'à un poste fixe de travail situé à proximité de l'unité porte-moule (22) équipée d'un premier moule (16A) arrêtée dans sa position angulaire de changement.

5. Dispositif de stockage dynamique (44) selon la revendication précédente, **caractérisé en ce que** les supports de stockage (54) intermédiaire sont montés mobiles le long d'un circuit fermé.

6. Dispositif de stockage dynamique (44) selon l'une quelconque des revendications 4 ou 5, **caractérisé en ce qu'**il comporte au moins un support de stockage (47) intermédiaire de plus que le nombre d'unités porte-moule (22) de la station (14) de soufflage de manière à disposer en permanence d'un support de stockage (47) libre pour déposer les éléments de moulage démontés d'un premier moule (16A).

7. Dispositif de stockage dynamique (44) selon l'une quelconque des revendications 5 à 6, **caractérisé en ce que** les supports de stockage (54) intermédiaire sont portés par un carrousel.

8. Dispositif de stockage dynamique (44) selon la revendication précédente, **caractérisé en ce que** le carrousel est un carrousel horizontal.

9. Dispositif de stockage dynamique (44) selon l'une quelconque des revendications 4 à 9, **caractérisé en ce que** les supports de stockage (54) intermédiaire sont portés par au moins un convoyeur horizontal (46, 48, 50, 52).

10. Dispositif de stockage dynamique (44) selon la revendication 7, **caractérisé en ce que** le carrousel est un carrousel vertical dans lequel les supports de stockage (54) intermédiaire sont formés ou portés par des nacelles (70).

## Patentansprüche

1. Verfahren zur Änderung der Formvertiefungen (24) von Behältern, insbesondere von Flaschen, aus einem thermoplastischen Material für eine Blasform- oder Streckblasformanlage (14), wobei die Blasformanlage (14) Folgendes aufweist:
- mehrere erste Formen (16A), die aus mindestens zwei Formelementen (18A, 20A) erstellt sind, wovon jedes mit einem Abschnitt einer ersten Formvertiefung (24A) des Behälters ausgestattet ist, wobei jede Form (16A) geeignet ist, eine Formungsposition einzunehmen, in der die konstitutiven Formelemente (18A, 20A) verbunden sind, um die erste Formvertiefung (24A) zu bilden;
- mehrere Formträgereinheiten (22), die von einem Karussell (26) getragen sind, wobei jede Formträgereinheit (22) eine erste Form (16A) beweglich zwischen einer geschlossenen Position, in der die erste zugeordnete Form (16A) ihre Formungsposition einnimmt, und einer offenen Position, in der die Formelemente (18A, 20A) der ersten Form (16A) getrennt sind, trägt;
- ein erstes Mittel zur Ablage aller ersten Formen (16A) in ihrer Formungsposition;
- ein zweites Mittel zur Ablage von mehreren zweiten Formen (16B), die den ersten Formen (16A) ähnlich sind und die eine zweite Formvertiefung (24B) darstellen, wobei alle zweiten Formen (16B) in ihrer Formungsposition abgelegt sind;
wobei das Verfahren zur Änderung der Formvertiefungen (24A) für jede Formträgereinheit (22) mindestens einen ersten Vorbereitungsschritt (E1) aufweist, in dessen Verlauf die Formelemente (18B, 20B) einer zweiten Form (16B) getrennt werden und dann auf einem ersten Träger zur Zwischenlagerung (39, 54) gelagert werden, bevor sie auf einer Formträgereinheit (22) angeordnet werden, die in einer indexierten Winkelposition zum Ersetzen in einem späteren, zweiten Ersetzungsschritt (E2) angehalten wird,
**dadurch gekennzeichnet, dass** der erste Vorbereitungsschritt (E1) für alle zweiten Formen (16B) durchgeführt wird, die dazu bestimmt sind, auf der Blasformanlage (14) montiert zu werden, während die Blasformanlage (14) noch Behälter mit den ersten Formen (16A) herstellt, wobei die zweiten Formen (16B) auf mehreren zugeordneten Trägern zur Zwischenlagerung (39, 54) getrennt gelagert werden, die in der Nähe der indexierten Position zum Ersetzen angeordnet werden.

2. Verfahren nach dem vorgenannten Anspruch, **dadurch gekennzeichnet, dass** es einen zweiten Ersetzungsschritt (E2) aufweist, der nach Abschluss des ersten Schritts (E1) in Gang gesetzt wird, wenn die Blasformanlage (14) außer Betrieb gesetzt worden ist und in dessen Verlauf:
- während einer Phase (P1) des Indexierens und des Öffnens eine Formträgereinheit (22) in einer indexierten Winkelposition zum Ersetzen angehalten wird;
- und dann während einer zweiten Phase des Abmontierens (P2) die Formelemente (18A, 20A) der ersten Form (16A), die von der Formträgereinheit (22) getragen werden, abmontiert und dann auf einem freien, zweiten Träger zur Zwischenlagerung (42, 47) getrennt gelagert werden;
- und dann während einer dritten Phase des Montierens (P3) die Formelemente (18B, 20B) von einer der zweiten Formen (16B), die während des ersten Vorbereitungsschritts (E1) gelagert worden ist, auf die Formträgereinheit (22) angeordnet wird.

3. Verfahren nach dem vorgenannten Anspruch, **dadurch gekennzeichnet, dass** es einen dritten Schritt des Ablegens (E3) aufweist, in dessen Verlauf die ersten Formen (16A), die in dem Verlauf des zweiten Schritts (E2) abmontiert werden, getrennt und dann in dem ersten Mittel zur Lagerung abgelegt werden, wobei der dritte Schritt des Ablegens (E3) nach dem Abmontieren aller ersten Formen (16A) und nachdem die Blasformanlage (14) wieder in Betrieb gesetzt worden ist, um Behälter mit den zweiten Formen (16B) herzustellen, in Gang gesetzt wird.

4. Dynamische Lagerungsvorrichtung (44) zum Umsetzen des Verfahrens nach einem der vorhergehenden Ansprüche, umfassend mehrere Träger zur Zwischenlagerung (54), wovon jeder dazu bestimmt ist, die getrennten Formelemente (18, 20) einer Form (16) aufzunehmen, und dass die Träger zur Zwischenlagerung (54) beweglich sind, **dadurch gekennzeichnet, dass** das Verschieben der Träger zur Zwischenlagerung (54) mit der Drehung des Karussells (26) der Blasformanlage (14) derart synchronisiert ist, dass der freie Träger zur Zwischenlagerung (47) und ein Träger zur Lagerung (54), der eine zweite Form (16B) trägt, bis zu einer festen Arbeitsstation geleitet werden, die in der Nähe der Formträgereinheit (22) angeordnet ist, die mit einer ersten Form (16A) ausgestattet ist, die in ihrer Winkelposition der Änderung angehalten ist.

5. Dynamische Lagerungsvorrichtung (44) nach dem vorhergehenden Anspruch, **dadurch gekennzeichnet, dass** die Träger zur Zwischenlagerung (54) beweglich entlang eines geschlossenen Kreislaufs angeordnet sind.

6. Dynamische Lagerungsvorrichtung (44) nach einem der Ansprüche 4 oder 5, **dadurch gekennzeichnet, dass** sie mindestens einen Träger zur Zwischenlagerung (47) mehr als die Anzahl der Formträgereinheiten (22) der Blasformanlage (14) aufweist, um ständig über einen freien Träger zur Lagerung (47) zu verfügen, um die abmontierten Formelemente einer ersten Form (16A) abzulegen.

7. Dynamische Lagerungsvorrichtung (44) nach einem der Ansprüche 5 bis 6, **dadurch gekennzeichnet, dass** die Träger zur Zwischenlagerung (54) von einem Karussell getragen sind.

8. Dynamische Lagerungsvorrichtung (44) nach dem vorhergehenden Anspruch, **dadurch gekennzeichnet, dass** das Karussell ein horizontales Karussell ist.

9. Dynamische Lagerungsvorrichtung (44) nach einem der Ansprüche 4 bis 9, **dadurch gekennzeichnet, dass** die Träger zur Zwischenlagerung (54) von mindestens einem horizontalen Förderband (46, 48, 50, 52) getragen sind.

10. Dynamische Lagerungsvorrichtung (44) nach Anspruch 7, **dadurch gekennzeichnet, dass** das Karussell ein vertikales Karussell ist, in dem die Träger zur Zwischenlagerung (54) durch Gondeln (70) gebildet oder getragen sind.

## Claims

1. Method for the changeover of the molding cavities (24) of a blow molding or stretch-blow molding station (14) for producing containers, in particular bottles, made from thermoplastic material, with the blow molding station (14) comprising:
- a plurality of first molds (16A) comprising at least two molding elements (18A, 20A) each of which is provided with a portion of a first container molding cavity (24A), with each mold (16A) being able to occupy a molding position in which the constituent molding elements (18A, 20A) are mated to form the first molding cavity (24A);
- a plurality of mold carriers (22) which are conveyed by a carousel (26), with each mold carrier (22) movably carrying a first mold (16A) between a closed position in which the first associated mold (16A) occupies its molding position, and an open position in which the molding elements (18A, 20A) of said first mold (16A) are unmated;
- a first storage means for all the first molds (16A) in their molding positions;
- a second storage means for a plurality of second molds (16B) which are similar to the first molds (16A) and which comprise a second molding cavity (24B), with all the second molds (16B) being stored in their molding positions;
the method for the changeover of all the first molding cavities (24A) comprising for each mold carrier (22) at least a first preparation stage (E1) during which molding elements (18B, 20B) of a second mold (16B) are unmated then stored on a first intermediate storage support (39, 54) before being mounted on a mold carrier (22) stopped in an indexed angular replacement position at a subsequent second replacement stage (E2), **characterized in that** the first preparation stage (E1) is carried out for all the second molds (16B) designed to be mounted on the blow molding station (14) while the blow molding station (14) continues to produce containers using the first molds (16A), with said second molds (16B) being stored unmated on a plurality of associated intermediate storage supports (39, 54) which are arranged near to the indexed replacement position.

2. Method according to the previous claim, **characterized in that** it comprises a second replacement stage (E2) which is commenced at the end of the first stage (E1) when the blow molding station (14) has been taken offline and during which:
- at a first indexing and opening phase (P1), a mold carrier (22) is stopped in an indexed angular replacement position;
- then, at a second removal phase (P2), the molding elements (18A, 20A) of the first mold (16A) carried by said mold carrier (22) are removed then stored unmated on a second clear intermediate storage support (42, 47);
- then, at a third mounting phase (P3), the molding elements (18B, 20B) of one of the second molds (16B) which was stored at the first preparation stage (E1) is mounted on said mold carrier (22).

3. Method according to the previous claim, **characterized in that** it comprises a third storage stage (E3) during which the first molds (16A) removed during the second stage (E2) are mated then stored in the first storage means, with the third storage stage (E3) being commenced once all the first molds (16A) have been removed and once the blow molding station (14) has been put back online to produce containers using the second molds (16B).

4. Dynamic storage device (44) for implementing the method according to any one of the previous claims, comprising a plurality of intermediate storage supports (54) each of which is designed to hold the unmated molding elements (18, 20) of a mold (16), and in that the intermediate storage supports (54) are mobile, **characterized in that** the travel of the intermediate storage supports (54) is synchronized with the rotation of the carousel (26) of the blow molding station (14) so that the clear intermediate storage support (47) and a storage support (54) carrying a second mold (16B) are moved up to a fixed work position located near to the mold carrier (22) fitted with a first mold (16A) stopped in its angular changeover position.

5. Dynamic storage device (44) according to the previous claim, **characterized in that** the intermediate storage supports (54) are movably mounted along a closed circuit.

6. Dynamic storage device (44) according to either of Claims 4 and 5, **characterized in that** it comprises at least one intermediate storage support (47) more than the number of mold carriers (22) provided in the blow molding station (14) so that there is one clear storage support (47) available at all times to deposit the molding elements removed from a first mold (16A).

7. Dynamic storage device (44) according to either one of Claims 5 and 6, **characterized in that** the intermediate storage supports (54) are carried by a carousel.

8. Dynamic storage device (44) according to the previous claim, **characterized in that** the carousel is a horizontal carousel.

9. Dynamic storage device (44) according to any one of Claims 4 to 9, **characterized in that** the intermediate storage supports (54) are carried by at least one horizontal conveyor (46, 48, 50, 52).

10. Dynamic storage device (44) according to Claim 7, **characterized in that** the carousel is a vertical carousel in which the intermediate storage supports (54) are formed or carried by platforms (70) .
